# EUROPEAN PATENT SPECIFICATION

(11) **EP 3 462 690 B1**
(45) Date of publication and mention of the grant of the patent: **28.10.2020**
(21) Application number: 18190103.4
(22) Date of filing: 21.08.2018
(51) Int. Cl.: H04L 12/861, H04L 12/931, H04L 12/935

(54) **PACKET SEQUENCE BATCH PROCESSING**
PAKETSEQUENZ VON STAPELVERARBEITUNG
TRAITEMENT PAR LOTS DE SÉQUENCE DE PAQUETS

(30) Priority: 28.09.2017 US 201715718836
(43) Date of publication of application: 03.04.2019
(73) Proprietor: INTEL Corporation, Santa Clara, CA 95054 (US)
(72) Inventor: BROWNE, John J., Limerick, V94 C44N (IE); MACNAMARA, Christopher, Limerick, V94 X65T (IE); KANTECKI, Tomasz, Ennis, V95 C8C0 (IE); HERMESH, Barak, Pardes Hana, 37000 (IE); HARTE, Sean, Limerick, V94 E70X (IE); CHILIKIN, Andrey, Limerick, V94 E1CN (IE); RYAN, Brendan, Limerick, V94 Y65R (IE); RICHARDSON, Bruce, Shannon, V14 P898 (IE); O'HANLON, Michael A., Limerick, V94 HF6K (IE); CUNNINGHAM, Andrew, Ennis, V95 R9NW (IE)
(74) Representative: Rummler, Felix

(56) References cited:
- US-A1- 2005 122 993
- US-A1- 2017 163 538
- US-B1- 6 453 360
- WEIBIN SUN ET AL: "Fast and flexible", ARCHITECTURES FOR NETWORKING AND COMMUNICATIONS SYSTEMS, IEEE PRESS, 445 HOES LANE, PO BOX 1331, PISCATAWAY, NJ 08855-1331 USA, 21 October 2013 (2013-10-21), pages 25-36, XP058058152, ISBN: 978-1-4799-1640-5
- SANGJIN HAN ET AL: "PacketShader : a GPU-accelerated software router", PROCEEDINGS OF THE ACM SIGCOMM 2010 CONFERENCE ON APPLICATIONS, TECHNOLOGIES, ARCHITECTURES, AND PROTOCOLS FOR COMPUTER COMMUNICATIONS, NEW DELHI, INDIA, AUGUST 30 -SEPTEMBER 3, 2010, 1 January 2010 (2010-01-01), page 195, XP055539299, 2 Penn Plaza, Suite 701 New York NY 10121-0701 USA DOI: 10.1145/1851182.1851207 ISBN: 978-1-4503-0201-2

## Description

### Field of the Specification

This disclosure relates in general to the field of communication, and more particularly, though not exclusively, to a system and method for packet sequence batch processing.

### Background

The Third-Generation Partnership Project (3GPP) is an organization that propagates wireless telecommunication standards and promotes their adoption. 3GPP has provided useful standards such as global system for mobile communication (GSM), enhanced data rates for GSM evolution (EDGE), code division multiple access (CDMA), universal mobile telecommunication system (UMTS), and long-term evolution (LTE).

Certain of these standards provide for a base station such as a NodeB, evolved node B (eNodeB), femtocell, home eNodeB (HeNB), or similar to operate one or more carriers on a defined UMTS Terrestrial Radio Access (UTRA) Absolute Radio Frequency Number (UARFCN).

US6453360B1 relates to a network interface for receiving a packet from a network and transferring it to a host computer system. A header portion of a received packet is parsed by a parser module to determine the packet's compatibility with, or conformance to, one or more pre-selected protocols. If compatible, a number of processing functions may be performed to increase the efficiency with which the packet is handled. In one function, a re-assembly engine re-assembles, in a re-assembly buffer, data portions of multiple packets in a single communication flow or connection. Header portions of such packets are stored in a header buffer. An incompatible packet may be stored in another buffer. In another function, a packet batching module determines when multiple packets in one flow are transferred to the host computer system, so that their header portions are processed collectively rather than being interspersed with headers of other flows' packets.

US2005/122993A1 relates to processing data to be transmitted in a transmission medium, including storing in memory a segment of data to be transmitted where the segment of data is larger than the largest size data packet allowed for transmission by the transmission medium. A socket layer batch processes the segment to produce an array of linked data blocks where each data block is smaller than the largest transmission size of the TCP layer. A TCP layer batch processes the array to add a first header to each block of the array of linked data blocks. An IP layer batch processes the array to add a second header to each block of the array of linked data blocks. The socket layer then identifies blocks of the array to a communication subsystem for individual packet communication over the transmission medium.

### Summary of the Invention

The invention is defined in the claims. In the following description, any embodiment referred to and not falling within the scope of the claims is merely an example useful to the understanding of the invention.

### Brief Description of the Drawings

The present disclosure is best understood from the following detailed description when read with the accompanying figures. It is emphasized that, in accordance with the standard practice in the industry, various features are not necessarily drawn to scale, and are used for illustration purposes only. Where a scale is shown, explicitly or implicitly, it provides only one illustrative example. In other embodiments, the dimensions of the various features may be arbitrarily increased or reduced for clarity of discussion.
**FIGURE 1** is a network-level diagram of a data center of a cloud service provider, according to one or more examples of the present specification.
**FIGURE 2** is a block diagram of a mobile network, according to one or more examples of the present specification.
**FIGURE 3** is a block diagram of an example network, according to one or more examples of the present specification.
**FIGURE 4** is a block diagram of a network interface card (NIC), according to one or more examples of the present specification.
**FIGURE 5** is a block diagram illustrating a use case of packet preprocessing, according to one or more examples of the present specification.
**FIGURE 6** is a flowchart of a method of performing packet processing, including packet preprocessing, according to one or more examples of the present specification.

### Embodiments of the Disclosure

The following disclosure provides many different embodiments, or examples, for implementing different features of the present disclosure. Specific examples of components and arrangements are described below to simplify the present disclosure. These are, of course, merely examples and are not intended to be limiting. Further, the present disclosure may repeat reference numerals and/or letters in the various examples. This repetition is for the purpose of simplicity and clarity and does not in itself dictate a relationship between the various embodiments and/or configurations discussed. Different embodiments may have different advantages, and no particular advantage is necessarily required of any embodiment.

In a common networking workflow, a plurality of packets or other data units in sequence comes into an edge router in a hardware platform, and the edge router performs some packet processing pipeline on each packet. Consider the example of a network service provider. A data over cable service interface specification (DOCSIS) modem may sit at the edge of a small-scale data center that provides the Internet access to end users or clients. As a packet comes in, the DOCSIS modem applies the packet processing pipeline to the packet, such as filtering, classifying, performing lookups, initiating security sequences, or other functions. The packet is then handled and forwarded appropriately according to access control lists, routing tables, or other mechanisms. An example packet consumption process may include consuming packet processing stages, comprising removing each packet from a queue and reading the current packet header data before making decisions.

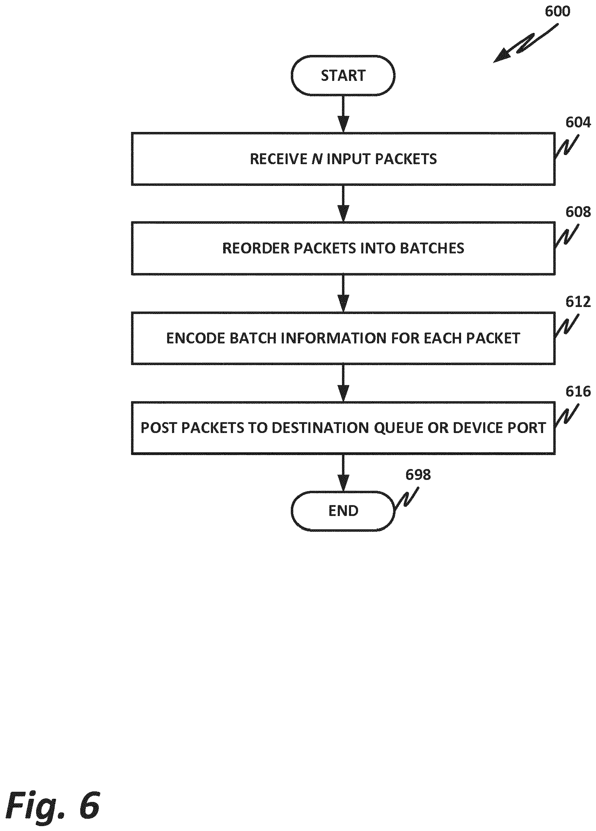

Because lookups occur on a per packet basis, certain efficiency gains can be realized by recognizing or detecting sequences of packets, such as runs or bursts that share a common attribute. By way of nonlimiting example, the common attribute may be a common destination, source media access control (MAC), source Internet Protocol (IP), virtual local area network (VLAN), Q-in-Q tag, IP flow, tunnel, layer 2.5 header, packet length, priority, header, protocol type, security association, datagram transport layer security (DTLS), transport layer security (TLS), media access control security (MACsec), and packet payload data. Embodiments of common attributes are discussed in further detail in connection with FIGURE 6.

Such sequences that share these common attributes may be usefully preprocessed into a batch, and rather than performing the packet processing pipeline on each individual packet in the batch, the packet processing pipeline may be applied *en grosse* to the entire batch. Thus, if the batch has for example 1024 packets, instead of performing 1024 individual lookups, a single lookup is performed for the entire batch.

A packet preprocessor may identify batches of packets, and provide via a host platform interface a hint or indication of the batch or sequence to the consuming device. As used throughout this specification, a "hint" can include any contextual information or metadata about the batch that enables a processor to make decisions about how to apply a processing pipeline to the batch or otherwise handle the batch. Note that hints may generally be understood to be non-imperative information. Thus, different host processors receiving a batch with an attached hint may handle the batch differently, depending on their internal programming. Although less common, it is also possible for a hint to include imperatives or direct instructions for processing the batch applicable to the batch, which the host processor may execute directly.

By way of example, a hint may be a sequence marker. The sequence marker may be inserted into the first packet in the sequence or batch, so that the receiving device can make a processing decision in advance of reading the subsequent packets in the batch.

By way of nonlimiting example, hints may also include a batch indicator, a batch code type, and a batch length. In embodiments of the present specification, these may allow the software processing the packets to optimize downstream processing.

Furthermore, the packet preprocessor of the present specification may also be configured to perform reordering of incoming packets. For example, if the edge router is receiving two different bursts of traffic from two different sources, in parallel, the packet preprocessor may identify sequences embedded within the two parallel incoming groups of packets, and reorder the packets into batches so that they can be subjected to batch processing. This reordering may advantageously maintain the ordering of the packets within the runs themselves. The use of reordering can thus advantageously maximize the runlength of each batch.

This allows later stages of packet processing, such as software, to better optimize packet processing based on the hints inserted into the packet batches. These hints may take the form of predictions about the sequence of incoming packets that the software can read and apply before processing the packets. Note that the hints provided need not be directed solely to the exact next stage of packet processing. Hints may usefully be employed by different stages of the packet processing.

As used throughout this specification, a batch comprises a run or sequence of packets (or data units) having a common attribute. By way of illustration, the common attribute could be an identical packet length. This could usefully identify the packets as belonging to some unified scheme. The packets could also be part of a common flow sequence, or a sequence of packets having a common IP tuple or security association. In embodiments of the present specification, it is advantageous to form batches from sequences of packets while maintaining ordering of packets in a common flow.

By applying the hints provided by the packet preprocessor, packet lookup can be accelerated by performing a single lookup for *n* packets. In the case of Internet Protocol security (IPsec), a selective availability (SA) database fetch could be used to accelerate encryption of *n* IPsec packets.

In other use cases, quality of service may be accelerated by examining a single entry, as opposed to an entry per packet, as a decision check before queuing *n* packets to a specific priority queue.

Upon transmitting the packets, the packet size runlength indicator for the batch may be used to allocate a memory block of size times *n* packets in a single allocation, rather than individually allocating *n* separate units of the given size.

Note that the teachings of the present specification enable a processor or a software thread to have information about the batch in advance of receiving the packets in the batch. This allows the receiving process to make decisions without having to read all of the packets in the batch itself. This a priori knowledge of the batch could, for example, enable the software to prepare an appropriate quality of service (QoS) queue, or allocate an appropriate memory buffer for handling the entire batch. This enables the receiving process to establish an affinity with the packet batch at a low cost cycle. For example, a sequence of packets that are all part of the same flow do not require multiple flow lookups. Instead, the receiving process can simply continue to reuse the last lookup for each of the packets in the batch. Because the process has a priori knowledge of the size of the batch, it knows in advance how many times to recycle the lookup from the first packet in the batch.

A system and method for packet sequence batch processing will now be described with more particular reference to the attached FIGURES. It should be noted that throughout the FIGURES, certain reference numerals may be repeated to indicate that a particular device or block is wholly or substantially consistent across the FIGURES. This is not, however, intended to imply any particular relationship between the various embodiments disclosed. In certain examples, a genus of elements may be referred to by a particular reference numeral ("widget 10"), while individual species or examples of the genus may be referred to by a hyphenated numeral ("first specific widget 10-1" and "second specific widget 10-2").

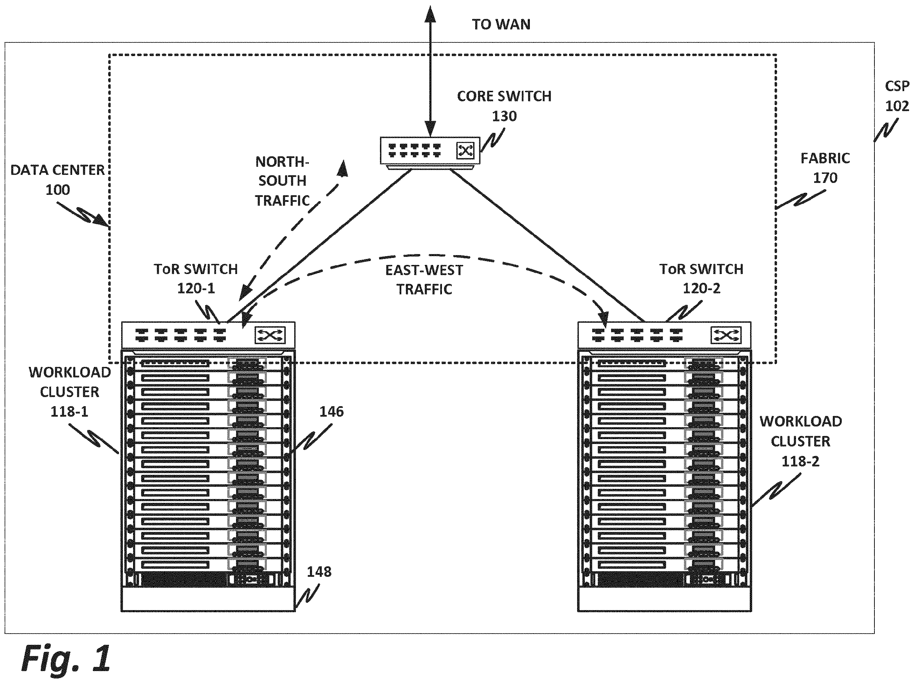

**FIGURE 1** is a network-level diagram of a data center 100 of a cloud service provider (CSP) 102, according to one or more examples of the present specification. CSP 102 may be, by way of nonlimiting example, a traditional enterprise data center, an enterprise "private cloud," or a "public cloud," providing services such as infrastructure as a service (IaaS), platform as a service (PaaS), or software as a service (SaaS).

CSP 102 may provision some number of workload clusters 118, which may be clusters of individual servers, blade servers, rackmount servers, or any other suitable server topology. In this illustrative example, two workload clusters, 118-1 and 118-2 are shown, each providing rackmount servers 146 in a chassis 148.

Each server 146 may host a standalone operating system and provide a server function, or servers may be virtualized, in which case they may be under the control of a virtual machine manager (VMM), hypervisor, and/or orchestrator, and may host one or more virtual machines (VMs), virtual servers, or virtual appliances. These server racks may be collocated in a single data center, or may be located in different geographic data centers. Depending on the contractual agreements, some servers 146 may be specifically dedicated to certain enterprise clients or tenants, while others may be shared.

The various devices in a data center may be connected to each other via a switching fabric 170, which may include one or more high speed routing and/or switching devices. Switching fabric 170 may provide both "north-south" traffic (e.g., traffic to and from the wide area network (WAN), such as the internet), and "east-west" traffic (e.g., traffic across the data center). Historically, north-south traffic accounted for the bulk of network traffic, but as web services become more complex and distributed, the volume of east-west traffic has risen. In many data centers, east-west traffic now accounts for the majority of traffic.

Furthermore, as the capability of each server 146 increases, traffic volume may further increase. For example, each server 146 may provide multiple processor slots, with each slot accommodating a processor having four to eight cores, along with sufficient memory for the cores. Thus, each server may host a number of VMs, each generating its own traffic.

To accommodate the large volume of traffic in a data center, a highly capable switching fabric 170 may be provided. Switching fabric 170 is illustrated in this example as a "flat" network, wherein each server 146 may have a direct connection to a top-of-rack (ToR) switch 120 (e.g., a "star" configuration), and each ToR switch 120 may couple to a core switch 130. This two-tier flat network architecture is shown only as an illustrative example. In other examples, other architectures may be used, such as three-tier star or leaf-spine (also called "fat tree" topologies) based on the "Clos" (common LISP object system) architecture, hub-and-spoke topologies, mesh topologies, ring topologies, or 3-D mesh topologies, by way of nonlimiting example.

The fabric itself may be provided by any suitable interconnect. For example, each server 146 may include a network interface card (NIC), an Intel® Host Fabric Interface (HFI), or other host interface. The host interface itself may couple to one or more processors via an interconnect or bus, such as peripheral component interconnect (PCI), PCI express (PCIe), or similar, and in some cases, this interconnect bus may be considered to be part of fabric 170.

The interconnect technology may be provided by a single interconnect or a hybrid interconnect, such as where PCIe provides on-chip communication, 1Gb or 10Gb copper Ethernet provides relatively short connections to a ToR switch 120, and optical cabling provides relatively longer connections to core switch 130. Interconnect technologies include, by way of nonlimiting example, Intel® Omni-Path™, TrueScale™, Ultra Path Interconnect (UPI) (formerly called QPI or KTI), FibreChannel, Ethernet, FibreChannel over Ethernet (FCoE), InfiniBand, PCI, PCIe, or fiber optics, to name just a few. Some of these will be more suitable for certain deployments or functions than others, and selecting an appropriate fabric for the instant application is an exercise of ordinary skill.

Note however that while high-end fabrics such as Omni-Path™ are provided herein by way of illustration, more generally, fabric 170 may be any suitable interconnect or bus for the particular application. This could, in some cases, include legacy interconnects like local area networks (LANs), token ring networks, synchronous optical networks (SONET), asynchronous transfer mode (ATM) networks, wireless networks such as WiFi and Bluetooth, "plain old telephone system" (POTS) interconnects, or similar. It is also expressly anticipated that in the future, new network technologies will arise to supplement or replace some of those listed here, and any such future network topologies and technologies can be or form a part of fabric 170.

In certain embodiments, fabric 170 may provide communication services on various "layers," as originally outlined in the OSI seven-layer network model. In contemporary practice, the OSI model is not followed strictly. In general terms, layers 1 and 2 are often called the "Ethernet" layer (though in large data centers, Ethernet has often been supplanted by newer technologies). Layers 3 and 4 are often referred to as the transmission control protocol/internet protocol (TCP/IP) layer (which may be further subdivided into TCP and IP layers). Layers 5 - 7 may be referred to as the "application layer." These layer definitions are disclosed as a useful framework, but are intended to be nonlimiting.

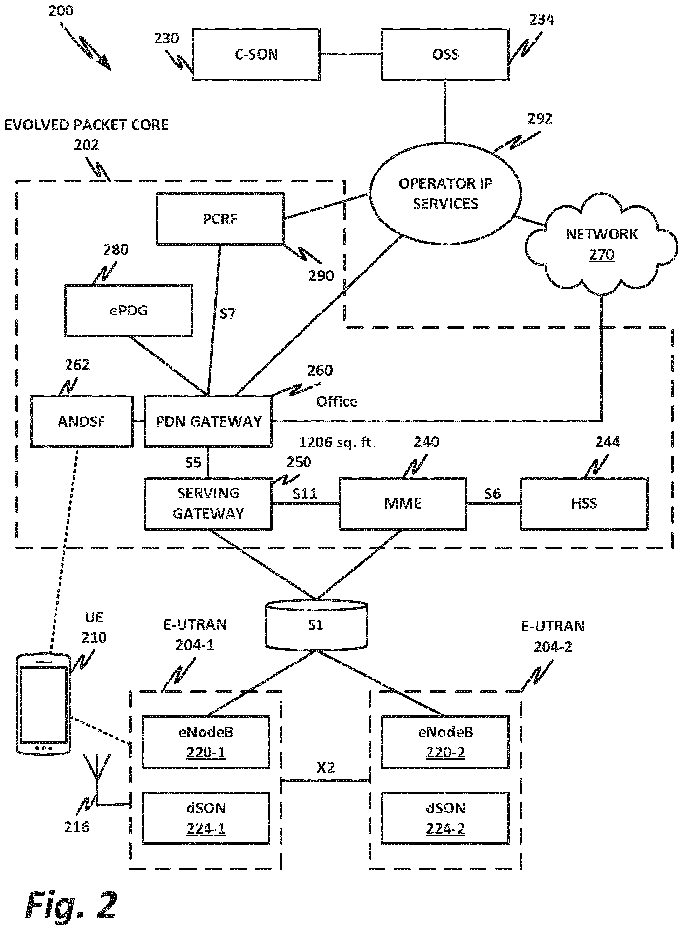

**FIGURE 2** is a block diagram of a mobile network 200 according to one or more examples of the present specification. In this specific example, a fourth-generation long-term evolution (4G LTE, or simply LTE) network is disclosed by way of non-limiting example. In certain embodiments, LTE is used primarily for data transfer, so that mobile network 200 may also provide, in addition to the elements shown here, structure for handling voice communication, which may communicatively couple to a public-switched telephone network (PSTN). In some cases, voice over LTE (VoLTE) may also be provided. It should also be noted that LTE is disclosed only as one possible embodiment of the teachings of this specification, and that the teachings may be relevant to other telecommunication structures now in existence or later developed, and the scope of this specification is intended to encompass such structures where applicable.

In this example, mobile network 200 includes user equipment (UE) 210 communicatively coupled, for example, via a wireless antenna 216, to an evolved UMTS radio access network (E-UTRAN) 204. UE 210 may initiate a data transaction or session with E-UTRAN 204-1, referred to herein as a "data call." E-UTRAN 204 communicatively couples to an evolved packet core (EPC) 202, for example via wired connections. E-UTRAN 204 may include, by way of non-limiting example, an evolved NodeB (eNB) 220, which acts as a wireless base station, and a distributed self-organizing network (dSON) controller 224.

In various embodiments, these functions may be provided by dedicated servers or appliances. In other embodiments, select functions may be provided in virtual environments, such as a rack-mounted server providing various functions in a hypervisor. In a general sense, the various UE-class devices, server-class devices, network functions, may be generally classified as "computing devices." As used throughout this specification, a computing device includes any electrical or electronic device based on the Von Neumann architecture, including a processor with a control unit and logic unit, and a memory. In that context, it should be understood that the Von Neumann architecture may be provided either as a physical device, or as a VM or hypervisor running at one or more layers of abstraction from the physical hardware.

In this example, two E-UTRANS 204-1 and 204-2 are disclosed to illustrate the mobile nature of the network. UE 210 may move, for example, as a user carrying UE 210 moves. As UE 210 moves farther away from E-UTRAN 204-1, its signal to E-UTRAN 204 will attenuate. If UE 210 simultaneously moves closer to E-UTRAN 204-2, its signal with E-UTRAN 204-2 will become strong.er When UE 210 has moved such that it gets a stronger signal to E-UTRAN 204-2 than to E-UTRAN 204-1, E-UTRAN 204-1 may hand off the data call to E-UTRAN 204-2, so that E-UTRAN 204-2 seamlessly continues handling the data call.

Handoff may be handled over an X2 interface (used to connect neighboring eNodeBs in a peer to peer fashion). In this example, two classes of signals are passed within mobile network 200: voice, data, and call signals (referred to herein as the "user plane" signals) and control signals (referred to herein as the "control plane" signals). X2 provides both a control plane interface and a user plane interface, and in an embodiment is a wired connection between the two E-UTRANs 204. The protocol structure of the S1 control plane is based on stream control transmission protocol/internet protocol (SCTP/IP). The user plane provides a protocol structure based on general packet radio service (GPRS) tunneling protocol/user datagram protocol/IP (GTP/UDP5/IP). On the user plane, a transport bearer may be identified by an IP address and one or more GTP tunneling endpoint IDs (TEID). X2 operates as a meshed interface, meaning that a plurality of eNBs 220 may all be linked together. Properly configured, X2 helps to minimize packet loss as UE 210 hands off from one E-UTRAN 204 to another. Specifically, when the data call is handed off, unsent or unacknowledged packets stored in the old eNB 220's queues can be forwarded or tunneled to the new eNB 220 via the X2 interface.

E-UTRANs 204 communicatively couple to an EPC 202 via an S1 interface. As with the X2 interface, S1 provides both a control plane and a user plane, configured similarly to the respective X2 control plane and user plane. In an embodiment, the S1 application protocol (S1-AP) is mapped directly on top of SCTP.

In this example, EPC 202 includes a serving gateway (SGW) 250, a mobility management entity (MME) 240, a home subscriber server (HSS) 244, a packet data network (PDN) gateway 260, an evolved packet data gateway (ePDG) 280, and policy and charging rules function (PCRF) 290. EPC 202 for its part may communicatively couple, via appropriate interfaces, to a public network such as internet 270, or to operator IP services 292.

When UE 210 is performing data operations, such as web applications, web surfing, e-mail, or other network operations, UE 220 connects to Internet 270 via mobile network 200. In one example scenario, user plane signals originate from UE 210 and are passed to E-UTRAN 204. Within E-UTRANs 204, user plane signals are fist received by eNB 220 (or other similar base station), which interfaces with EPC 202 to handle the data call.

As a wireless local area network (WLAN) access point (WAP), eNB 220 supports Layer 1 and Layer 2 of the E-UTRAN orthogonal frequency division multiplexing (OFDM) physical interface. Advantageously, eNBs 220 may directly connect to a network router, thus simplifying network architecture. eNB 220 may support certain legacy features related to physical layer procedures for transmitting and receiving, including modulation and demodulation, and channel encoding and decoding. eNB 220 may also provide radio resource control and radio mobility management for processing handovers.

EPC 202 provides several functional blocks to provide various support functions. These are described herein by way of non-limiting example only.

MME 240 provides control functions to EPC 202. MME 240 provides idle mode UE paging and tagging procedures, including retransmissions. MME 240 also provides bearer activation and deactivation support, and may choose an appropriate SGW 250 for UE 210 when UE 210 initially attaches to EPC 202 via E-UTRAN 204. After attachment, MME 240 authenticates UE 210 via HSS 244.

Non Access Stratum (NAS) signaling terminates at MME 240, and MME 240 is also responsible for generating and allocating a temporary identity for UE 210. MME 240 then verifies the authorization of UE 210 to resources on the service provider's public land mobile network (PLMN), and enforces roaming restrictions on UE 210. MME 240 is also a terminal endpoint for ciphering/integrity protection for NAS signaling, and handles security key management. MME 240 also supports lawful signal interception. MME 240 also provides control plane functions for mobility between LTE and 2G/3G networks with the S3 interface terminating at MME 240 from, for example, a 3G serving GPRS support node (SGSN). Finally, MME 240 terminates the S6a interface of HSS 244 for roaming UEs.

HSS 244 is, in an embodiment, a database server to provide home location register (HLR) and authentication center (AuC) services. The functions of the HSS include call and session establishment support, user authentication, and access authorization, by way of non-limiting example.

In an embodiment, HLR stores and updates a user subscription information database. This may include the following, by way of nonlimiting example:
a. User identification and addressing, including the International Mobile Subscriber Identity (IMSI), Mobile Subscriber ISDN Number (MSISDN), and/or mobile telephone number.
b. User profile information, including subscriptions and quality of service (QoS) data.

AuC generates security data from user identity keys, and provides the data to at least the HLR, and as necessary, to other functional blocks.

SGW 250 forwards user data packets, while also acting as the mobility anchor for the user plane during inter-eNodeB handovers and as the anchor for mobility between LTE and other 3GPP technologies (terminating S4 interface and relaying the traffic between 2G/3G systems and PDN Gateway 250). When UE 210 is idle, SGW 250 terminates the downlink data path and triggers paging when downlink data arrives for UE 210. SGW 250 may also store UE contexts including parameters of the IP bearer service and network internal routing information. It also performs replication of the user traffic in case of lawful interception.

PDN Gateway 260 provides connectivity from UE 210 to external packet data networks (PDNs) and provides both an entry point and exit point for UE traffic. UE 210 may simultaneously connect to more than one PDN Gateway 250, and thus may access multiple PDNs. In an example, PDN Gateway 250 provides policy enforcement, packet filtering on a per-user basis, charging support, lawful interception, and packet screening, by way of nonlimiting example.

Access Network Discovery and Selection Function (ANDSF) 262 helps UE 210 discover non-3GPP access networks, such as Wi-Fi or WIMAX, that can be used in addition to the LTE network for data communication. ANDSF 260 may provide UE 210 with rules policing the connection to such networks. ANDSF 260 may provide the following to UE, by way of non-limiting example:
a. Inter-system mobility policy (ISMP) - network selections rules for when UE 210 has no more than one active access network connection (e.g., either LTE or Wi-Fi).
b. Inter-system routing policy (ISRP) - network selection rules for when UE 210 has potentially more than one active access network connection (e.g., both LTE and Wi-Fi). In this case, UE 210 may employ IP flow mobility, multiple-access PDN connectivity (MAPCON), or non-seamless Wi-Fi offload according to policy and user preferences.
c. Discovery information - a list of networks that may be available in the vicinity of UE 210, and information to help UE 210 connect to these networks.

ANDSF 262 may communicates with the UE 210 over the S14 reference point, which in some embodiments is specific to ANDSF.

PCRF 290 provides, in an embodiment, both policy decision functions (PDF) and charging rules functions (CRF).

PDF makes policy decisions. Specifically, when an IP multimedia subsystem (IMS) is set up, session initiation protocol (SIP) data include media requirements, which the terminal and proxy call session control function (P-CSCF) may exchange between themselves. During the session establishment process, the PDF may also receive those requirements from the P-CSCF and make decisions based on network operator rules. These may include, by way of non-limiting example:
a. Allowing or rejecting a media request.
b. Using new or existing PDP context for an incoming media request.
c. Checking allocation of resources against authorized resource usage.

The CRF provides operator-defined charging rules applicable to each service data flow. The CRF selects the relevant charging rules based on information provided by the P-CSCF, such as Application Identifier, Type of Stream (audio, video, etc.), or Application Data Rate, by way of nonlimiting example.

ePDG 280 secures data transmission with a UE 210 connected to EPC 202 over an untrusted, non-3GPP access. For this purpose, the ePDG acts as a termination node of IPsec tunnels established with UE 210.

Network 270 may be any suitable network or combination of one or more networks operating on one or more suitable networking protocols, including for example, a local area network, an intranet, a virtual network, a wide area network, a wireless network, a cellular network, or the Internet (optionally accessed via a proxy, VM, or other similar security mechanism) by way of nonlimiting example. Network 270 may also include one or more servers, firewalls, routers, switches, security appliances, antivirus servers, or other useful network devices. In this illustration, network 270 is shown as a single network for simplicity, but in some embodiments, network 270 may include a large number of networks, such as one or more enterprise intranets connected to the Internet.

Operator IP services 292 include services provided by an operator of EPC 202. Operator IP services 292 may include, or may communicatively couple to an operations support system (OSS) 232. OSS 232 provides hardware and software for monitoring, controlling, analyzing, and managing EPC 202.

Advantageously, LTE provides for self-organizing networks (SONs) (also sometimes called a self-optimizing network, which is used interchangeably). SON provides automation methods to facilitate planning, configuring, managing, optimizing, and healing a network such as EPC 202 and E-UTRAN 204.

SON may be provided in different flavors, including for example centralized SON (C-SON) 230, distributed SON (dSON) 224, and in some cases hybrid SON (hSON).

C-SON 230 provides centralized higher-level network control, with increased coordination between nodes for functions such as load balancing across a wide geographic area. In contrast, dSON 224 provides a distributed, peer-to-peer control function, in which each E-UTRAN network wirelessly receives reported parameters from other E-UTRANs, and makes autonomous decisions based on those reports. An hSON (not shown in this illustration) provides a hybrid solution in which some functions are centralized and others are distributed.

Advantageously, SON provides useful functions such as:
a. Self-configuration. In a self-configuration network, new base stations are automatically configured and integrated into the network, and new features on a base station are also seamlessly integrated. When a new base station is introduced into the network and powered on, it is immediately recognized and registered by the network. The neighboring base stations then automatically adjust to provide the required coverage and capacity, as well as to avoid the interference.
b. Self-Optimization. Base station such as eNBs 220 may provide configuration parameters intended to control and/or optimize their behavior. Based on observations of both eNB 220 itself, and measurements at UE 210 or elsewhere, a SON may automatically reconfigure these parameters to enhance network efficiency. In another embodiment, SON provides automatic neighbor relations (ANR), and optimizes random access parameters or mobility robustness. In yet another embodiment, SON switches off some number of base stations at night to conserve power. These base stations may be selected to ensure that full coverage is still provided in a coverage area. Neighboring base station may reconfigure appropriate parameters to ensure full coverage and adjust to the changed network topology. If a sudden spike in demand occurs, one or more sleeping base stations may wake up almost instantaneously. This may realize significant power savings without sacrificing network
c. Self-Healing. If a network node (such as an eNB 220) goes down, self-healing helps to mitigate the effect of the failure on the overall network. For example a SON may adjust parameters and algorithms in adjacent eNBs 220 so that they can continue to provide service to the failed eNB 220. This is in contrast to legacy networks, where substantial time and resources may need to be committed to repairs when a base station fails. With self-healing networks, the network may automatically and nearly-instantaneously self-adjust with little or no service interruption.

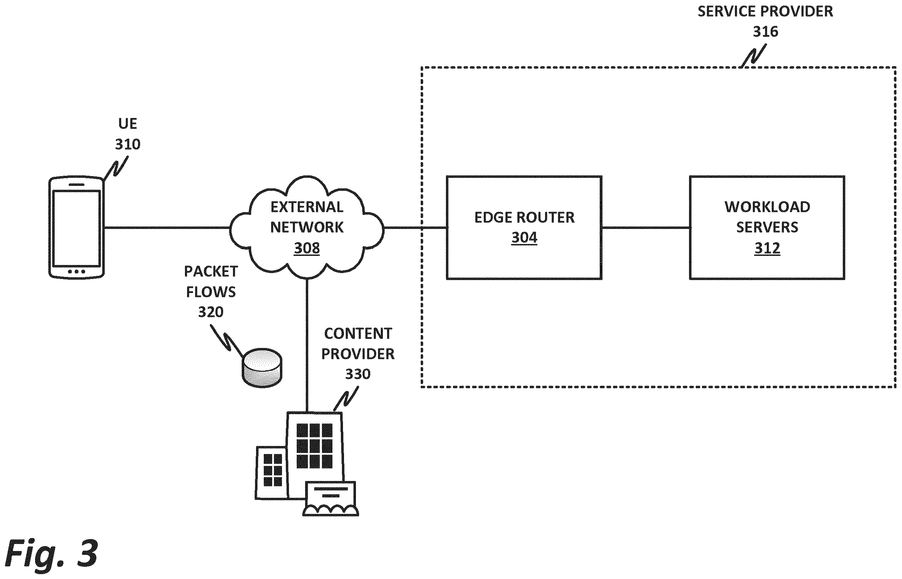

**FIGURE 3** is a block diagram of an example network according to one or more examples of the present specification. In this example, a user may interact with a service provider 316, and service provider 316 provides some service to the user. For example, service provider 316 may be an Internet service provider, providing Internet access to the user. In other examples, service provider 316 could be providing a specific service, such as a video streaming service, or some other service streaming multimedia, dynamic web content, interactive cloud gaming, and telecommuting business applications, by way of nonlimiting example.

Note that service provider 316 may commonly provide services to a large number of end users. In some embodiments, service provider 316 may also interconnect with a content provider 330.

Note that the designation of "content provider 330" and "users" in this specification are by way of nonlimiting example only. Packets that can be usefully batched may come from any suitable entity.

In this case, content provider 330 may be providing video streaming services to a large number of users operating user equipment 310. Each user may be watching a different streaming program on the service. Content provider 330 provides a number of packet flows 320, which are routed via external network 308 to service provider 316. Service provider 316 includes an edge router 304, as well as workload servers 312. Note that workload servers 312 may be owned by a service provider 316, and in some cases may be leased by a content provider 330. Many other configurations are possible. In this example, a user operating UE 310 is watching a video via content provider 330. Content provider 330 is providing a large number of packet flows 320 via external network 308, which are routed via service provider 316 to UE 310.

Packet flows 320 may include flows that have a common attribute, and thus may be able to be batched. For example, content provider 330 may be providing content in parallel to a number of users. The packets intended for each user may not arrive continuously at edge router 304. Rather, they may be interspersed with packets for other users. However, it is advantageous for edge router 304 to aggregate sequences of packets into flows or into batches based on a common attribute. This allows streamlined processing within edge router 304, as well as streamlined processing on workload servers 312 which may perform additional work, such as IPsec, encryption or decryption, antivirus checking, load balancing, or other useful functions. Thus, edge router 304 may benefit from having a packet preprocessor as illustrated in the present specification.

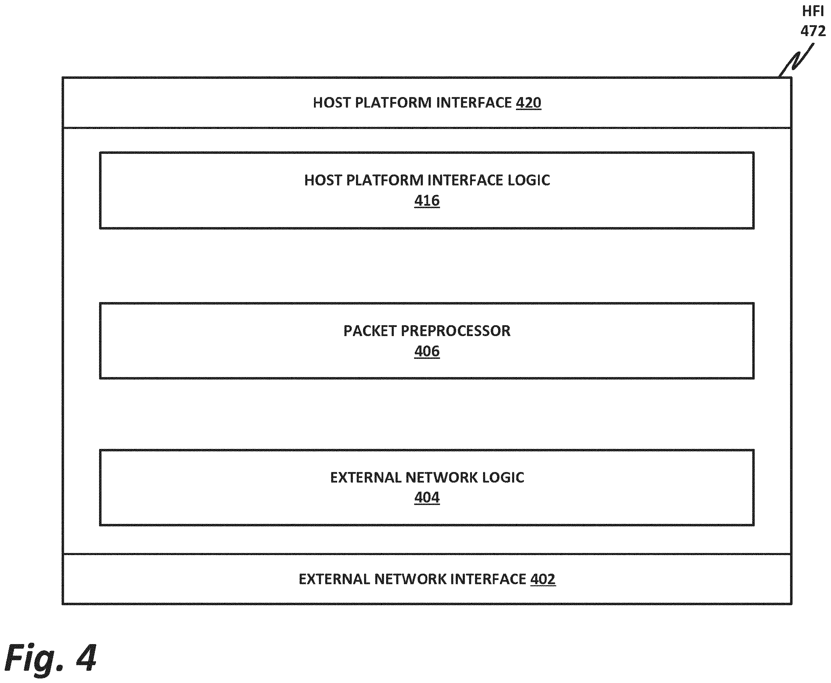

**FIGURE 4** is a block diagram of a network interface card (NIC) 472 according to one or more examples of the present specification.

This NIC 472 is provided by way of nonlimiting example only. It should be noted in particular that NIC 472 may be a separate pluggable card, such as a PCIe card, or it may be tightly integrated and on-die with its host core. Furthermore, while NIC 472 is disclosed herein as the medium for hosting remote hardware acceleration functions, these functions could just as well be hosted in another part of the machine. For example, a dedicated RHA chip could be provided, which itself could be very much like a hardware accelerator. Functions could be performed on a hardware block integrated into the core, or these functions could be performed in software on the core. Thus, the disclosure of remote hardware acceleration functions on NIC 472 in this figure should be understood as a nonlimiting and illustrative example only, and the present disclosure should be understood to encompass any suitable hardware or software configuration for realizing remote hardware acceleration.

In this example, NIC 472 includes two physical interfaces, namely a host platform interface 420 and an external network interface 402.

Host platform interface 420 may provide a physical interface to a local bus on the host, such as a PCIe interface or other local interconnect. Host platform interface 420 is provided as a nonlimiting example, and it should be understood that other interconnect methods are possible. For example, in cases where NIC 472 is tightly coupled with its accompanying core, host platform interface 420 could be direct, on-die trace lines, or direct copper connections on an integrated circuit board. In other examples, a bus interface other than PCIe could be used.

External network interface 402 provides the physical interconnect to a fabric, such as fabric 170 of FIGURE 1 or any of the fabrics disclosed herein. External network interface 402 may be configured to connect NIC 472 to any suitable fabric.

In one particular example, the Intel® Omni-Path™ fabric may be used. The Omni-Path™ fabric is advantageous because it allows mapping of addresses and memory ranges between different coherent domains. A system may include one or more coherent domains wherein all coherent domains are connected to each other via a fabric. Caching agents are the coherency agents within a node that process memory requests from cores within the same node, thus providing the coherency of the domain. Home agents are node clusters that are responsible for processing memory requests from the caching agents, and act as a home for part of the memory address space. A single die may have multiple homes, having a distributed address space mapping. Depending on the address space that the request targets, the request may go to the same node's local memory or they may go to a UPI agent, for example, to route the request to other processors within the same coherent domain. Alternately, a request may go through the NIC 472 to processors that are outside the coherent domain. All processors connected via the UPI belong to the same coherent domain. Thus, in one embodiment, NIC 472 may communicate with an Omni-Path™ fabric via UPI tunneling.

This communication may be facilitated via external network logic 404, which provides logic elements and instructions necessary to provide communication within a coherent domain, and across the fabric with different coherent domains. external network logic 404 may also include logic to translate local requests into remote fabric requests.

On the other hand, host platform interface logic 416 may provide logic for interfacing with the local bus, such as a PCIe bus, or a dedicated copper connection. Alternately, traffic through NIC 472 may follow a path through host platform interface 420, host platform interface logic 416, external network logic 404, and external network interface 402 out to the fabric.

Packet preprocessor 406 may be configured to provide packet preprocessing according to the teachings of the present specification. In various nonlimiting examples, packet preprocessing may be provided either by way of hardware or software, and may take the form of identifying runs or sequences of packets that arrive together that can be treated as a batch, with appropriate hints inserted into the first packet in the sequence to tell a downstream application how it may treat the sequences of packets. These hints could include the nature of the packet, flow identifiers, and the value of the common attribute, and may also include the number of packets in the batch so that downstream applications know how many packets to apply the common processing to. Note that in some examples, runs or sequences of packets may arrive at external network interface 402 out of order, and thus packet preprocessor 406 may, in addition to identifying existing runs, reorder those packets into runs or sequences, so that larger batches can be formed. This increases the benefit of applying the teachings of the present specification by allowing the batch processing to be applied to larger numbers of packets.

In various embodiments, packet preprocessor 406 may be included on NIC 472 as a software block running on a local processor, a hard or soft IP block, an application-specific integrated circuit, optionally with appropriate memory buffers or support circuits, a field programmable gate array, or some other hardware or software solution. Furthermore, while packet preprocessor 406 is shown in this example as an inline feature of NIC 472, this need not be the case. Packet preprocessor 406 could be provided in some examples as a coprocessor that is off-board from NIC 472, or may even be provided in software running on the host platform, such as on the CPU, that performs preprocessing on the packets before they are provided to a software packet processing pipeline.

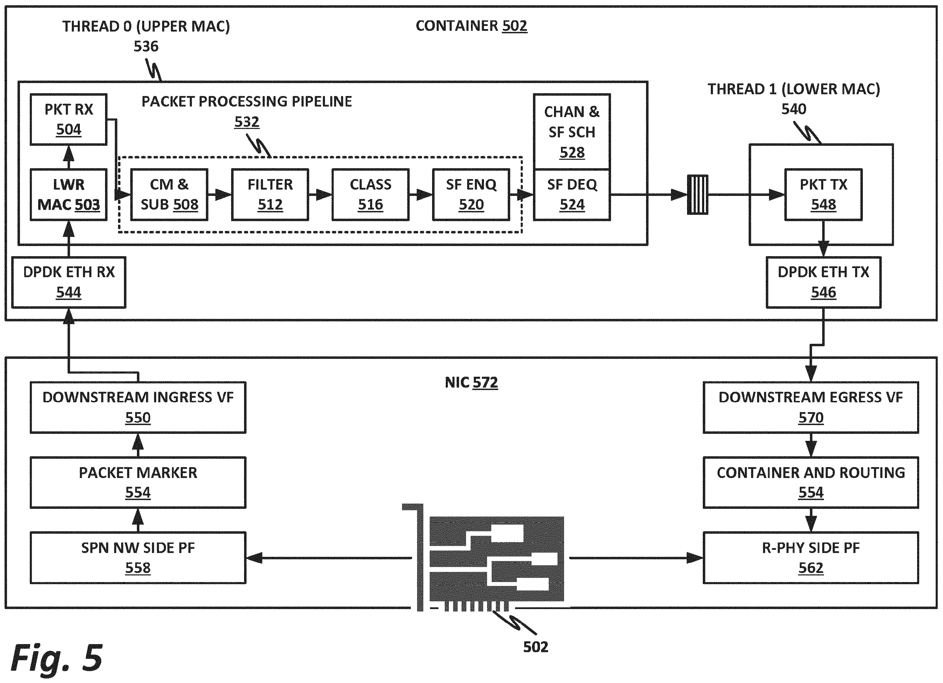

**FIGURE 5** is a block diagram illustrating a use case of packet preprocessing according to one or more examples of the present specification. While the technology disclosed herein is broadly useable in many different network applications, certain embodiments may be particularly applicable to internet service providers (ISPs), which often operate smaller single-purpose data centers (in contrast to much larger, multi-tenant data centers that may be operated by, for example, CSPs). In the case, the technology could be provided on a DOCSIS modem and/or edge router for the ISP. For example, this case could represent a converged cable access pipeline. The teachings of the present specification could be applicable to network elements, as well as wireless and fixed communication infrastructure where packets need to be classified for scheduling and rate shaping of the flows to which these packets belong.

Because the packet preprocessor of the present specification enables processing of packets by groups in a pipeline, advantages are realized because there is a reduced cycle count for the pipeline. Once a result has been obtained for a single packet within a batch, for example classification, the same result may be applied to all successive packets in the same batch, according to the batch size identifier.

In the example of FIGURE 5, a NIC 572 is provided, including a packet preprocessor, similar to packet preprocessor 406 of FIGURE 4.

NIC 572 includes both a transmit side and a receive side, or in other words, NIC 572 includes both ingress interfaces and egress interfaces. On the ingress side, packets come in to external network interface 502. NIC 572 then provides the packets to the physical function side of service provider network (SP NW Side PF) 558.

Packets are then provided to a packet marker 554, which may be part of a packet preprocessor. Packet marker 554 may include or identify a virtual function per container. It may also provide virtual local area network (VLAN) routing to virtual functions (VFs) per MAC domain downstream service group (SG). Finally, packet marker 554 may mark runs or sequences of packets as batches. In some examples, packet marker 554 may also perform reordering of streams so that larger batches can be formed. Packet marker 554 provides packets, including those marked with appropriate batch identifiers to a downstream ingress VF 550. Downstream ingress VF 550 provides the packet to, for example, a container 502 which provides packet processing. This may include a thread 0 (upper MAC) 536, and a thread 1 (lower MAC) 540.

Thread 0 536 is of particular interest to the present specification. In this example, the stream of packets is received by a data plane development kit (DPDK) Ethernet receiver virtual interface 544. DPDK Ethernet RX 544 provides the stream of packets to a lower MAC processing block 503, which performs lower MAC processing according to known methods. The packet is then sent to packet receiver 504 of thread 0 536. Packet receiver 504 then provides the packet to the packet processing pipeline 532. Several examples of operations that may be included in a packet processing pipeline 532 are illustrated here. However, these should be understood to be nonlimiting examples. Furthermore, the designation of packet processing pipeline 532 as a pipeline is also a nonlimiting example. Certain operations may be performed in parallel, or may be optional, or otherwise may not fit the paradigm of a pipeline.

In the example packet processing pipeline, the software first performs a DOCSIS standard cable modem (CM) lookup and subscription management function 508.

Packets are then provided to filter 512, which filters the packets according to various attributes.

Packets are next provided to a classifier 516, which classifies the packets.

Finally, packets are provided to a service flow enqueue (ENQ) 520, which queues the packets for a service flow. After the full packet processing pipeline has been performed, packets are provided to a service flow dequeue (DEQ) 524, which may also include a channel and service flow (SF) scheduler 528.

Once packets have been handled by an application, outputs may be provided via thread 1 (lower MAC) 540, which may include such services as a packet header update and circular redundancy check (CRC), encryption of the packet, DOCSIS framing, downstream external physical interface (DEPI) and layer two tunneling protocol (L2TP) encapsulation, and finally L2TP Tx by way of nonlimiting example. The output packets are then provided to a DPDK Ethernet transmitter 546, which provides the packet to a downstream egress virtual function 570 of NIC 572.

The packet is next provided to a container and routing block 554, which may provide as before a virtual function per container.

The packet is provided to the physical function side of remote physical layer (R-PHY SIDE PF) 562, and is finally routed out via external network interface 502.

**FIGURE 6** is a flowchart of a method 600 of performing packet processing, including packet preprocessing according to one or more examples of the present specification. This method takes packets and encodes information about runs or sequences of packets into the packet metadata, mbuf, or queue. These sequences of packets can be referred to as a batch.

At block 604, the system receives n input packets. Note that these packets may be of a single sequence or flow, or may include a plurality of sequences or flows.

In block 608, a packet preprocessor may, as necessary, reorder packets into batches. Reordering of packets into batches may be based on identifying a common attribute for the packets. In some examples, rather than reordering, the packet preprocessor simply applies its preprocessing to existing runs or sequences of packets. Note that in cases where packets are reordered, ordering within the same flow or sequence may be preserved.

The packet preprocessor detects the runs of packet attributes (PAs) independently, and may write an indication of the type of packet attribute and run-length into the metadata of the first packet where the run starts.

Packet attribute runs may be detected in sequence. The common attribute of the packets may include multiple occurrences of the following, by way of nonlimiting example:
- Common source media access control (MAC).
- Common source IP.
- Common VLAN.
- Common Q-in-Q tag (SVLAN, CVLAN).
- Common IP flow (for example, a MAC/IP source or destination MAC/IP).
- Common tunnel, such as in generic routing encapsulation (GRE) or general packet radio services (GPRS) tunneling program user plane (GTP-U).
- Common layer 2.5 header, as in multi-protocol label switching (MPLS).
- Common packet length.
- Common priority, as in differentiated services code point (DSCP).
- Common header.
- Common protocol type.
- Common security association, such as IPsec, datagram transport layer security (DTLS), transport layer security (TLS), and media access control security (MACsec).
- Common packet payload data.

In block 612, information about the batch is encoded for each packet. Note that this does not mean that the information is encoded into each packet, but rather, the information for the entire batch may be encoded in a header of the first packet. This can include identifying the common attribute, so that downstream applications can perform a single lookup or operation on that attribute, as well as identifying the length of the batch, so that the downstream application can know for how many iterations it can reuse the lookup. In certain embodiments, combinations of runs are possible. For example, if multiple attributes are common in a sequence, each attribute run may be recorded and represented independently.

The batch may be encoded in the same metadata in a format, such as:

```
 [<Run indicator><Run code type><Run length>]<Optional run value>
```

Alternatively, the preprocessor may be allowed to run on spans that cross more than just the packets held in the NIC first in, first out (FIFO), and could be used to detect runs of any arbitrary length. In this case, the batch may be encoded in the form of:

```
 <Run type start><Run type end>
```

In block 616, the batch of packets is posted to the destination queue or device port.

In the case of receiving the *n* input packets, as in block 604, the packets may be stored for example in a FIFO in static random access memory (SRAM) on a NIC. Alternately, the packets may be stored in a ring such as a collaborative data exchange (CDEX) ring, or in a fabric. In general, there are many different ways that packets can be received and handled in a network, and the present specification is not intended to be limited to any particular embodiment.

The reordering of block 608 may provide optimized flow sequence detection. Packets may be reordered by grouping packets of the same flow into contiguous runs, while maintaining the relative order of the packets within the flow. Note that independent flows are not impacted by the reordering process. Rather, the position in the queue simply shifts.

Reordering may be used to create new packet attribute batches, with the constraint that in some embodiments the grouping does not cause the packets in the same flow to go out of order. Packets may be grouped according to various factors, such as, by way of nonlimiting example:
- Packets may be grouped together into runs with the same packet priority (DSCP field).
- Packets may be grouped according to recurring packet attributes, as listed in packet attribute runs.
- Because more than one ordering is possible, the packet reordering may be performed to create the longest possible run of the most important packet runs, to maximize the reuse of particularly heavyweight operations that otherwise would be performed on a per packet basis.

Encoding of batch information in block 612 may include the following for each packet (i.e., from 1 to N):
- Parse all packet header fields (including, for example, Ethernet type and IP tuples).
- Classify the packet type (i.e., protocol type).
- Determine the destination queue (e.g., host CPU queue or switch fabric queue).
- Check the attributes against the previous packet attributes for the destination queue.
- For each packet attribute:
   a. If the packet attribute of this packet is the same as the previous packet, increment the count for that attribute.
   b. If the packet attribute of this packet is not equal to the previous packet and the PA count is greater than one, then write the PA code and length to packet metadata of the first packet where the PA sequence started and reset the PA count.

This process may be assisted using a hashing function, such as a NIC hash function like "really simple syndication" (RSS) to detect the end of a run. In this case, the hash may be applied to a packet. If the hash does not have the same hash as packet *n* - 1, assuming the hash is calculated on some or all relevant header fields, it is guaranteed to not be in the same run. Thus, the hash can be used to detect the end of the run.

The foregoing outlines features of several embodiments so that those skilled in the art may better understand various aspects of the present disclosure. Those skilled in the art should appreciate that they may readily use the present disclosure as a basis for designing or modifying other processes and structures for carrying out the same purposes and/or achieving the same advantages of the embodiments introduced herein. Those skilled in the art should also realize that such equivalent constructions do not depart from the scope of the present disclosure, and that they may make various changes, substitutions, and alterations herein without departing from the scope of the present disclosure.

All or part of any hardware element disclosed herein may readily be provided in a system-on-a-chip (SoC), including central processing unit (CPU) package. An SoC represents an integrated circuit (IC) that integrates components of a computer or other electronic system into a single chip. Thus, for example, client devices or server devices may be provided, in whole or in part, in an SoC. The SoC may contain digital, analog, mixed-signal, and radio frequency functions, all of which may be provided on a single chip substrate. Other embodiments may include a multichip module (MCM), with a plurality of chips located within a single electronic package and configured to interact closely with each other through the electronic package.

Note also that in certain embodiments, some of the components may be omitted or consolidated. In a general sense, the arrangements depicted in the figures may be more logical in their representations, whereas a physical architecture may include various permutations, combinations, and/or hybrids of these elements. It is imperative to note that countless possible design configurations can be used to achieve the operational objectives outlined herein. Accordingly, the associated infrastructure has a myriad of substitute arrangements, design choices, device possibilities, hardware configurations, software implementations, and equipment options.

In a general sense, any suitably-configured processor can execute any type of instructions associated with the data to achieve the operations detailed herein. Any processor disclosed herein could transform an element or an article (for example, data) from one state or thing to another state or thing. In operation, a storage may store information in any suitable type of tangible, nontransitory storage medium (for example, random access memory (RAM), read only memory (ROM), field programmable gate array (FPGA), erasable programmable read only memory (EPROM), electrically erasable programmable ROM (EEPROM), etc.), software, hardware (for example, processor instructions or microcode), or in any other suitable component, device, element, or object where appropriate and based on particular needs. Furthermore, the information being tracked, sent, received, or stored in a processor could be provided in any database, register, table, cache, queue, control list, or storage structure, based on particular needs and implementations, all of which could be referenced in any suitable timeframe. Any of the memory or storage elements disclosed herein, should be construed as being encompassed within the broad terms 'memory' and 'storage,' as appropriate. A nontransitory storage medium herein is expressly intended to include any nontransitory special-purpose or programmable hardware configured to provide the disclosed operations, or to cause a processor to perform the disclosed operations.

Computer program logic implementing all or part of the functionality described herein is embodied in various forms, including, but in no way limited to, a source code form, a computer executable form, machine instructions or microcode, programmable hardware, and various intermediate forms (for example, forms generated by an assembler, compiler, linker, or locator). In an example, source code includes a series of computer program instructions implemented in various programming languages, such as an object code, an assembly language, or a high-level language such as OpenCL, FORTRAN, C, C++, JAVA, or HTML for use with various operating systems or operating environments, or in hardware description languages such as Spice, Verilog, and VHDL. The source code may define and use various data structures and communication messages. The source code may be in a computer executable form (e.g., via an interpreter), or the source code may be converted (e.g., via a translator, assembler, or compiler) into a computer executable form, or converted to an intermediate form such as byte code. Where appropriate, any of the foregoing may be used to build or describe appropriate discrete or integrated circuits, whether sequential, combinatorial, state machines, or otherwise.

In one example embodiment, any number of electrical circuits of the FIGURES may be implemented on a board of an associated electronic device. The board can be a general circuit board that can hold various components of the internal electronic system of the electronic device and, further, provide connectors for other peripherals. Any suitable processor and memory can be suitably coupled to the board based on particular configuration needs, processing demands, and computing designs. Note that with the numerous examples provided herein, interaction may be described in terms of two, three, four, or more electrical components. However, this has been done for purposes of clarity and example only. It should be appreciated that the system can be consolidated or reconfigured in any suitable manner. Along similar design alternatives, any of the illustrated components, modules, and elements of the FIGURES may be combined in various possible configurations, all of which are within the broad scope of this specification.

Numerous other changes, substitutions, variations, alterations, and modifications may be ascertained to one skilled in the art and it is intended that the present disclosure encompass all such changes, substitutions, variations, alterations, and modifications as falling within the scope of the appended claims.

### Example Implementations

The following examples are provided by way of illustration.

Example 1 includes an apparatus, comprising: a hardware platform; logic to execute on the hardware platform, the logic configured to: receive a batch comprising a first plurality of packets; identify a common attribute of the batch; perform batch processing on the batch according to the common attribute; generate a hint for the batch, the hint comprising information about the batch to facilitate processing of the batch; and forward the batch to a host platform network interface with the hint.

Example 2 includes the apparatus of example 1, wherein the common attribute is a common destination.

Example 3 includes the apparatus of example 1, wherein the common destination is a common media access control (MAC) address.

Example 4 includes the apparatus of example 3, wherein batch processing comprises identifying a common service flow of the batch, wherein identifying the common service flow is based at least in part on a (source, destination, protocol) tuple.

Example 5 includes the apparatus of example 1, wherein batch processing comprises identifying *n* packets of a common size *s,* wherein the hint comprises an instruction to allocate an *n* × *s* memory block.

Example 6 includes the apparatus of example 1, wherein the common attribute comprises packets belonging to a common virtual local area network (VLAN), and wherein the hint comprises a single lookup for the batch.

Example 7 includes the apparatus of example 1, wherein the common attribute comprises packets all having a common priority.

Example 8 includes the apparatus of example 1, wherein the first plurality of packets is a subgroup of a second plurality of packets, and wherein the logic is further to reorder packets within the second plurality of packets to form the batch.

Example 9 includes the apparatus of example 8, wherein the logic is to form the batch while maintaining ordering of packets in a common flow.

Example 10 includes the apparatus of example 1, wherein the common attribute comprises common payload data.

Example 11 includes the apparatus of example 1, wherein the common attribute comprises a common security association.

Example 12 includes the apparatus of example 1, wherein the common attribute is selected from the group consisting of a common tunnel, a common layer header, a common protocol type, a common virtual local area network (VLAN), a common security association, a common protocol type, a common priority, a common network layer, a common tunnel, a common payload data, and a common Q-in-Q tag.

Example 13 includes the apparatus of any of examples 1 - 11, wherein the hint comprises a batch indicator, a batch code type, and a batch length.

Example 14 includes the apparatus of any of examples 1 - 11, wherein the logic comprises a hardware logic device selected from the group consisting of an application-specific integrated circuit (ASIC), field-programmable gate array (FPGA), and a hard or soft intellectual property (IP) block.

Example 15 includes the apparatus of any of examples 1 - 11, wherein the logic comprises a software packet pre-processing engine.

Example 16 includes a network interface device, comprising: an ingress interface; a host platform interface; processing logic between the ingress interface and egress interface to: receive a batch comprising a first plurality of packets; identify a common attribute of the batch; perform batch processing on the batch according to the common attribute; generate a hint for the batch, the hint comprising information about the batch to facilitate processing of the batch; and forward the batch to a host platform network interface with the hint.

Example 17 includes the network interface device of example 16, wherein the common attribute is a common destination.

Example 18 includes the network interface device of example 16, wherein the common destination is a common media access control (MAC) address.

Example 19 includes the network interface device of example 18, wherein batch processing comprises identifying a common service flow of the batch, wherein identifying the common service flow is based at least in part on a (source, destination, protocol) tuple.

Example 20 includes the network interface device of example 16, wherein batch processing comprises identifying *n* packets of a common size *s,* wherein the hint comprises an instruction to allocate an *n* × *s* memory block.

Example 21 includes the network interface device of example 16, wherein the common attribute comprises packets belonging a common virtual local area network (VLAN), and wherein the hint comprises a single lookup for the batch.

Example 22 includes the network interface device of example 16, wherein the common attribute comprises packets all having a common priority.

Example 23 includes the network interface device of example 16, wherein the first plurality of packets is a subgroup of a second plurality of packets, and wherein the logic is further to reorder packets within the second plurality of packets to form the batch.

Example 24 includes the network interface device of example 23, wherein the logic is to form the batch while maintaining ordering of packets in a common flow.

Example 25 includes the network interface device of example 16, wherein the common attribute comprises common payload data.

Example 26 includes the network interface device of example 16, wherein the common attribute comprises a common security association.

Example 27 includes the network interface device of example 16, wherein the common attribute is selected from the group consisting of a common tunnel, a common layer header, a common protocol type, a common virtual local area network (VLAN), a common security association, a common protocol type, a common priority, a common network layer, a common tunnel, a common payload data, and a common Q-in-Q tag.

Example 28 includes the network interface device of any of examples 16 - 27, wherein the hint comprises a batch indicator, a batch code type, and a batch length.

Example 29 includes the network interface device of any of examples 16 - 27, wherein the processing logic comprises a hardware logic device selected from the group consisting of an application-specific integrated circuit (ASIC), field-programmable gate array (FPGA), and a hard or soft intellectual property (IP) block.

Example 30 includes the network interface device of any of examples 16 - 27, wherein the logic comprises a software packet pre-processing engine.

Example 31 includes a method of providing batch processing of incoming packets on a network interface, comprising: receiving a batch comprising a first plurality of packets on an ingress interface; identifying a common attribute of the batch; performing batch processing on the batch according to the common attribute; generating a hint for the batch, the hint comprising information about the batch to facilitate processing of the batch; and forwarding the batch to a host platform network interface with the hint.

Example 32 includes the method of example 31, wherein the common attribute is a common destination.

Example 33 includes the method of example 31, wherein the common destination is a common media access control (MAC) address.

Example 34 includes the method of example 33, wherein batch processing comprises identifying a common service flow of the batch, wherein identifying the common service flow is based at least in part on a (source, destination, protocol) tuple.

Example 35 includes the method of example 31, wherein batch processing comprises identifying *n* packets of a common size *s,* wherein the hint comprises an instruction to allocate an *n* × *s* memory block.

Example 36 includes the method of example 31, wherein the common attribute comprises packets belonging a common virtual local area network (VLAN), and wherein the hint comprises a single lookup for the batch.

Example 37 includes the method of example 31, wherein the common attribute comprises packets all having a common priority.

Example 38 includes the method of example 31, wherein the first plurality of packets is a subgroup of a second plurality of packets, and wherein the logic is further to reorder packets within the second plurality of packets to form the batch.

Example 39 includes the method of example 38, wherein the logic is to form the batch while maintaining ordering of packets in a common flow.

Example 40 includes the method of example 31, wherein the common attribute comprises common payload data.

Example 41 includes the method of example 31, wherein the common attribute comprises a common security association.

Example 42 includes the method of example 31, wherein the common attribute is selected from the group consisting of a common tunnel, a common layer header, a common protocol type, a common virtual local area network (VLAN), a common security association, a common protocol type, a common priority, a common network layer, a common tunnel, a common payload data, and a common Q-in-Q tag.

Example 43 includes the method of any of examples 31 - 42, wherein the hint comprises a batch indicator, a batch code type, and a batch length.

Example 44 includes an apparatus comprising means for performing the method of any of examples 31 - 43.

Example 45 includes the apparatus of example 44, wherein the means comprise a network interface having processing logic.

Example 46 includes the apparatus of example 45, wherein the processing logic comprises a hardware logic device selected from the group consisting of an application-specific integrated circuit (ASIC), field-programmable gate array (FPGA), and a hard or soft intellectual property (IP) block.

Example 47 includes the apparatus of example 45, wherein the logic comprises a software packet pre-processing engine.

Example 48 includes a computing device comprising the network interface of any of examples 45 - 47.

## Claims

1. A method of providing batch processing of incoming packets on a network interface, comprising:
receiving (604) a first plurality of packets on an ingress interface, wherein the first plurality of packets is a subgroup of a second plurality of packets;
identifying (608) a common attribute of the first plurality of packets and reordering packets within the second plurality of packets, based on the common attribute, to form a batch while maintaining ordering of packets in the first plurality of packets;
performing batch processing on the batch according to the common attribute;
generating a hint for the batch, the hint comprising information about the batch to facilitate processing of the batch and comprising a batch indicator, a batch code type, and a batch length; and
forwarding the batch to a host platform network interface with the hint.

2. The method of claim 1, wherein the common attribute is a common destination.

3. The method of claim 2, wherein the common destination is a common media access control, MAC, address.

4. The method of claim 3, wherein batch processing comprises identifying a common service flow of the batch, wherein identifying the common service flow is based at least in part on a (source, destination, protocol) tuple.

5. The method of claim 1, wherein batch processing comprises identifying *n* packets of a common size *s,* wherein the hint comprises an instruction to allocate an *n* × *s* memory block.

6. The method of claim 1, wherein the common attribute comprises packets belonging a common virtual local area network, VLAN, and wherein the hint comprises a single lookup for the batch.

7. The method of claim 1, wherein the common attribute comprises packets all having a common priority.

8. The method of claim 1, wherein the common attribute is selected from the group consisting of a common tunnel, a common layer header, a common protocol type, a common virtual local area network, VLAN, a common security association, a common protocol type, a common priority, a common network layer, a common tunnel, a common payload data, and a common Q-in-Q tag.

9. An apparatus comprising means for performing the method of any of claims 1 - 8.

10. The apparatus of claim 9, wherein the means comprise a network interface having processing logic.

11. The apparatus of claim 10, wherein the processing logic comprises a hardware logic device selected from the group consisting of an application-specific integrated circuit, ASIC, field-programmable gate array, FPGA, and a hard or soft intellectual property, IP, block.

12. The apparatus of claim 10, wherein the logic comprises a software packet pre-processing engine.

13. A computing device comprising the network interface of any of claims 10 - 12.

## Patentansprüche

1. Verfahren zum Bereitstellen einer Stapelverarbeitung ankommender Pakete bei einer Netzschnittstelle, das Folgendes umfasst:
Empfangen (604) einer ersten Mehrzahl von Paketen bei einer Eintrittsschnittstelle, wobei die erste Mehrzahl von Paketen eine Untergruppe einer zweiten Mehrzahl von Paketen ist;
Identifizieren (608) eines gemeinsamen Attributs der ersten Mehrzahl von Paketen und Umordnen von Paketen innerhalb der zweiten Mehrzahl von Paketen auf der Grundlage des gemeinsamen Attributs, um einen Stapel zu bilden, während die Reihenfolge von Paketen in der ersten Mehrzahl von Paketen beibehalten wird;
Ausführen einer Stapelverarbeitung an dem Stapel in Übereinstimmung mit dem gemeinsamen Attribut;
Erzeugen eines Hinweises auf den Stapel, wobei der Hinweis Informationen über den Stapel, um die Verarbeitung des Stapels zu erleichtern, einen Stapelindikator, einen Stapelcode-Typ und eine Stapellänge enthält; und
Weiterleiten des Stapels zu einer Host-Plattform-Netzschnittstelle zusammen mit dem Hinweis.

2. Verfahren nach Anspruch 1, wobei das gemeinsame Attribut ein gemeinsames Ziel ist.

3. Verfahren nach Anspruch 2, wobei das gemeinsame Ziel eine gemeinsame Medienzugriffssteueradresse, MAC-Adresse, ist.

4. Verfahren nach Anspruch 3, wobei die Stapelverarbeitung das Identifizieren eines gemeinsamen Dienststroms des Stapels umfasst, wobei das Identifizieren des gemeinsamen Dienststroms wenigstens teilweise auf einem (Quelle, Ziel, Protokoll)-Tupel beruht.

5. Verfahren nach Anspruch 1, wobei die Stapelverarbeitung das Identifizieren von n Paketen mit gemeinsamer Größe s umfasst, wobei der Hinweis eine Anweisung enthält, um einen n × s-Speicherblock zuzuweisen.

6. Verfahren nach Anspruch 1, wobei das gemeinsame Attribut Pakete enthält, die zu einem gemeinsamen virtuellen Nahbereichsnetz, VLAN, gehören, und wobei der Hinweis ein einfaches Nachschlagen nach dem Stapel enthält.

7. Verfahren nach Anspruch 1, wobei das gemeinsame Attribut Pakete enthält, die alle eine gemeinsame Priorität besitzen.

8. Verfahren nach Anspruch 1, wobei das gemeinsame Attribut aus der Gruppe gewählt ist, die aus einem gemeinsamen Tunnel, einem gemeinsamen Schichtkopfsatz, einem gemeinsamen Protokolltyp, einem gemeinsamen virtuellen Nahbereichsnetz, VLAN, einer gemeinsamen Sicherheitszuordnung, einem gemeinsamen Protokolltyp, einer gemeinsamen Priorität, einer gemeinsamen Netzschicht, einem gemeinsamen Tunnel, gemeinsamen Nutzlastdaten und einem gemeinsamen Q-in-Q-Etikett besteht.

9. Vorrichtung, die Mittel umfasst, um das Verfahren nach einem der Ansprüche 1-8 auszuführen.

10. Vorrichtung nach Anspruch 9, wobei die Mittel eine Netzschnittstelle, die Verarbeitungslogik besitzt, umfassen.

11. Vorrichtung nach Anspruch 10, wobei die Verarbeitungslogik eine Hardware-Logikvorrichtung enthält, die aus der Gruppe gewählt ist, die aus einer anwendungsspezifischen integrierten Schaltung, ASIC, einem feldprogrammierbaren Gate-Array, FPGA, und einem Hard- oder Soft-Block für geistiges Eigentum, IP-Block, besteht.

12. Vorrichtung nach Anspruch 10, wobei die Logik eine Vorverarbeitungs-Engine für Software-Pakete enthält.

13. Rechenvorrichtung, die die Netzschnittstelle nach einem der Ansprüche 10-12 enthält.

## Revendications

1. Procédé de fourniture d'un traitement par lots de paquets entrants sur une interface réseau, comprenant :
la réception (604) d'une première pluralité de paquets sur une interface d'entrée, la première pluralité de paquets étant un sous-groupe d'une seconde pluralité de paquets ;
l'identification (608) d'un attribut commun de la première pluralité de paquets et la remise en ordre de paquets dans la seconde pluralité de paquets, sur la base de l'attribut commun, pour former un lot tout en maintenant une mise en ordre de paquets dans la première pluralité de paquets ;
la réalisation d'un traitement par lots sur le lot conformément à l'attribut commun ;
la génération d'un indice pour le lot, l'indice comprenant des informations relatives au lot pour faciliter le traitement du lot et comprenant un indicateur de lot, un type de code de lot et une longueur de lot ; et
le transfert du lot à une interface réseau de plate-forme hôte avec l'indice.

2. Procédé selon la revendication 1, dans lequel l'attribut commun est une destination commune.

3. Procédé selon la revendication 2, dans lequel la destination commune est une adresse de commande d'accès au support, MAC, commune.

4. Procédé selon la revendication 3, dans lequel le traitement par lot comprend l'identification d'un flux de service commun du lot, l'identification du flux de service commun étant basée au moins en partie sur un tuple (source, destination, protocole).

5. Procédé selon la revendication 1, dans lequel le traitement par lots comprend l'identification de n paquets d'une taille commune s, l'indice comprenant une instruction d'allouer un bloc de mémoire de *n* x *s*.

6. Procédé selon la revendication 1, dans lequel l'attribut commun comprend des paquets appartenant à un réseau local virtuel, VLAN, commun et dans lequel l'indice comprend une consultation unique du lot.

7. Procédé selon la revendication 1, dans lequel l'attribut commun comprend des paquets ayant tous une priorité commune.

8. Procédé selon la revendication 1, dans lequel l'attribut commun est sélectionné dans le groupe consistant en un tunnel commun, un en-tête de couche commun, un type de protocole commun, un réseau local virtuel, VLAN, commun, une association de sécurité commune, un type de protocole commun, une priorité commune, une couche de réseau commune, un tunnel commun, des données de charge utile communes, et une balise QinQ commune.

9. Appareil comprenant des moyens pour réaliser le procédé selon l'une quelconque des revendications 1 à 8.

10. Appareil selon la revendication 9, dans lequel les moyens comprennent une interface réseau présentant une logique de traitement.

11. Appareil selon la revendication 10, dans lequel la logique de traitement comprend un dispositif logique matériel sélectionné dans le groupe consistant en un circuit intégré spécifique à l'application, ASIC, un réseau prédiffusé programmable par l'utilisateur, FPGA, et un bloc de propriété intellectuelle, IP, matériel ou logiciel.

12. Appareil selon la revendication 10, dans lequel la logique comprend un moteur de prétraitement de paquets logiciel.

13. Dispositif informatique comprenant l'interface réseau selon l'une quelconque des revendications 10 à 12.
